# EUROPEAN PATENT SPECIFICATION

(11) **EP 0 369 706 B1**
(45) Date of publication and mention of the grant of the patent: **08.03.1995**
(21) Application number: 89311713.5
(22) Date of filing: 13.11.1989
(51) Int. Cl.: G02F 1/025, G02F 1/015, G02F 1/17

(54) **Optical intensity modulator**
Optischer Intensitätsmodulator
Modulateur d'intensité optique

(30) Priority: 18.11.1988 JP 290174/88
(43) Date of publication of application: 23.05.1990
(73) Proprietor: FUJITSU LIMITED, Kawasaki-shi, Kanagawa 211 (JP)
(72) Inventor: Sugawara, Mitsuru, Sagimahara-shi Kanagawa, 228 (JP)
(74) Representative: Fane, Christopher Robin King

(56) References cited:
- DE-A- 3 715 071
- US-A- 4 913 506
- APPLIED PHYSICS LETTERS, vol. 50, no. 25, June 1987, pp. 1776-1778 ; H. TEMKIN et al.: "InGaAsP/InP quantum well modulators grown by gas source molecular beam epitaxy"
- ELECTRONICS LETTERS, vol. 20, no. 19, September 1984, pp. 790-792 ; K. FUJIWARA et al. : "Gigahertz-bandwidth InGaAsP/InP optical modulators/switches with double-hetero waveguides"
- JOURNAL OF LIGHTWAVE TECHNOLOGY, vol. LT-4, no. 10, October 1986, pp. 1445-1453 ; Y. NODA et al. : "High-speed electroabsorption modulator with strip-loaded GaInAsP planar waveguide"
- IEEE JOURNAL OF QUANTUM ELECTRONICS, vol. QE-10, no. 7, July 1974, pp. 551-556 ; D.P. BORTFELD : "Analysis of heterojunction optical waveguides with a modulated region smaller than the guide width"
- ELECTRONICS LETTERS, Vol. 21, No. 25/26, 5th December 1985 Y. NODA et al.: "1.6 GHz Electroabsorption ...", pp. 1182-1183

## Description

The present invention relates to optical intensity modulators.

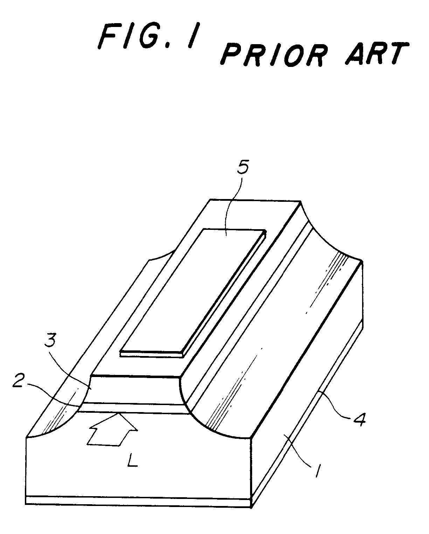

Figure 1 of the accompanying drawings shows a perspective view of a conventional optical intensity modulator, for modulating the intensity of a transmitted laser beam in accordance with an electrical signal applied to the modulator. The illustrated optical intensity modulator is made up of an n⁺-type compound semiconductor substrate 1, an n⁻-type active layer 2, a p⁺-type compound semiconductor layer 3, an electrode 4 formed on a bottom face of the n⁺-type semiconductor substrate, and an electrode 5 formed on a top face of the p⁺-type semiconductor layer 3. An incident laser beam L emitted from a laser diode (not shown) is projected on to one end face of the optical intensity modulator. The incident laser beam L is transmitted through the active layer 2, which serves as a wave-guide path, and emerges from an opposite end face of the optical intensity modulator.

Generally, the width of the forbidden band in the active layer 2 is 20 to 30 meV greater than the energy of the incident laser beam L. When a reverse bias voltage is applied, by way of the electrodes 4 and 5, to the p-n junction between the n⁻-type active layer 2 and the p⁺-type layer 3, the absorption edge in the active layer 2 moves toward lower energies, owing to the Franz-Keldysh effect. This can cause the incident laser beam L to be absorbed within the active layer 2 so that no laser beam is emitted from the said opposite end face of the modulator. The incident laser beam L may therefore be intensity modulated by turning on and off the reverse bias voltage applied by way of the electrodes 4 and 5.

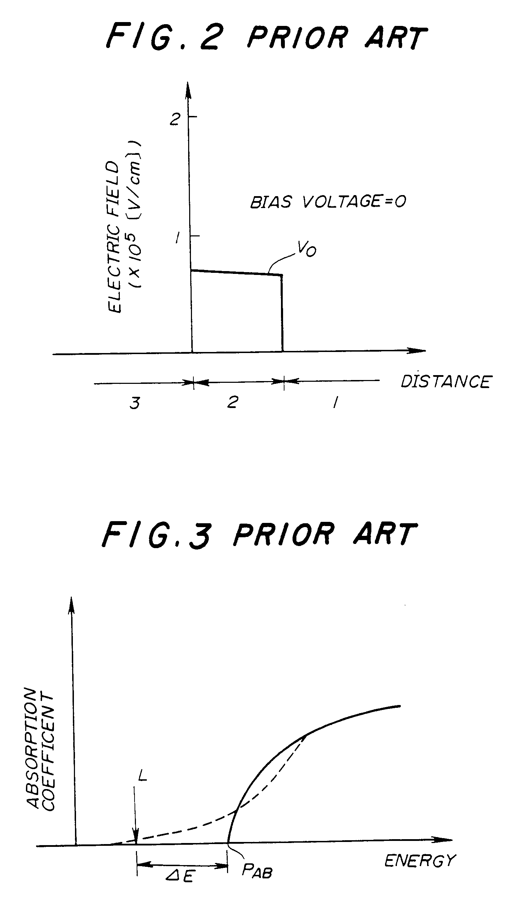

However, the conventional optical intensity modulator presents a disadvantage in that the incident laser beam L is absorbed in the active layer 2 to a significant extent even when there is no externally applied reverse bias. This disadvantage may be understood more readily with the aid of Figure 2 of the accompanying drawings which is a graph showing the variation in electric field strength in the vicinity of the p-n junction when the externally applied reverse bias is zero. The horizontal axis of the graph represents distance in the thickness direction of each layer and the vertical axis represents the electric field strength in V/cm. Figure 2 uses the same reference numerals as those shown in Figure 1 to indicate the positions of the layers 1 to 3 along the distance axis.

Under such zero external bias conditions, in such a conventional modulator in which the active layer 2 is 0.2»m thick, a diffusion voltage exists that establishes in the layer 2 an electric field as indicated by the line V₀. This causes the absorption edge in the active layer 2 to be moved towards lower energies, with the result that energy of the laser beam L is absorbed in the active layer 2, so that the beam emerging from the modulator is undesirably reduced in power.

Figure 3 of the accompanying drawings is a graph illustrating the effect of an electric field on absorption of laser beam energy in the active layer 2. The horizontal axis of the graph represents energy, and the vertical axis represents the relevant absorption coefficient. A solid line curve shows how the co-efficient depends on the energy in the absence of any electric field in the active layer material, and a broken line curve shows this relationship when a reverse bias voltage is applied, for example by way of the electrodes 4 and 5.

The absorption edge of the material of the active layer 2 in the absence of any electric field therein is indicated at P_{AB}, and ΔE is the difference in energy between the absorption edge P_{AB} and the incident laser beam L. Because of this predetermined energy difference, one might expect the laser beam emerging from the modulator, when no bias is applied by way of electrodes 4 and 5, to have an intensity close to that of the incident beam. However, as described above, an internal electric field due to a diffusion voltage in the active layer 2 can produce an effect such as that illustrated by the broken line curve in Figure 3, thereby causing the laser beam L to suffer significant absorption and attenuation in the active layer 2. To overcome this shortcoming, the energy difference ΔE could conceivably be set equal to or greater than about 50 mev, but this would present another disadvantage in that the change in the absorption coefficient obtained upon application of the normal external reverse bias voltage would then be undesirably small.

Another way of combatting this problem would be to interpose a buffer layer, having the same conduction type as the active layer 2, between the layers 2 and 3. Such a modulator is shown in Electronics Letters, Vol. 20, No. 19, September 1984, pages 790-792.

An object of the present invention is to provide an optical intensity modulator that is improved, in that laser beam absorption in the active layer under zero bias conditions is significantly reduced, as compared with the modulator shown in the above-mentioned pages of Electronics Letters.

According to the present invention there is provided an optical intensity modulator including a compound semiconductor substrate of a first conduction type, a first electrode formed on one main face of the substrate, a compound semiconductor active layer for transmitting a laser beam to be modulated, which layer is of the said first conduction type and is formed on an opposite main face of the substrate, a second compound semiconductor layer, of the said first conduction type, formed on the said active layer, a third compound semiconductor layer, of the opposite conduction type, formed on the said second compound semiconductor layer, so that the second semiconductor layer is sandwiched between the said active layer and the said third compound semiconductor layer, and a second electrode formed on an outer main face of the third semiconductor layer, so that the third semiconductor layer is sandwiched between that electrode and the second semiconductor layer, characterised in that the thickness d of the said second semiconductor layer satisfies the equation:${\text{d = [[(2ε}}_{\text{r}} {\text{.ε₀/(e.N)]·V}}_{\text{d}} {\text{]}}^{\text{1/2}} \text{,}$
where εᵣ is the relative permittivity of the second semiconductor layer, ε₀ is the free-space value of permittivity, e is the electronic charge, N is the majority carrier density in the second semiconductor layer, and V_{d} is the junction contact potential between the second and third semiconductor layers.

Further embodiments of the invention are defined in the dependent claims.

Further reference will now be made, by way of example, to the accompanying drawings, in which:
Figure 1 is a perspective view of a conventional optical intensity modulator as described above;
Figures 2 and 3 show graphs as described above;
Figure 4 is a perspective view of an optical intensity modulator embodying the present invention;
Figure 5 is a cross-sectional view of the modulator of Figure 4; and
Figure 6 is a graph illustrating variation in electric field strength in the modulator of Figure 4.

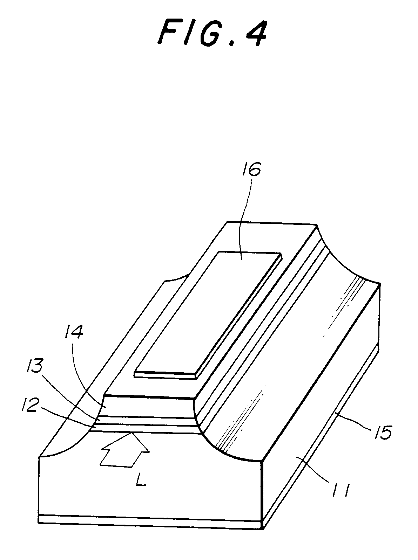

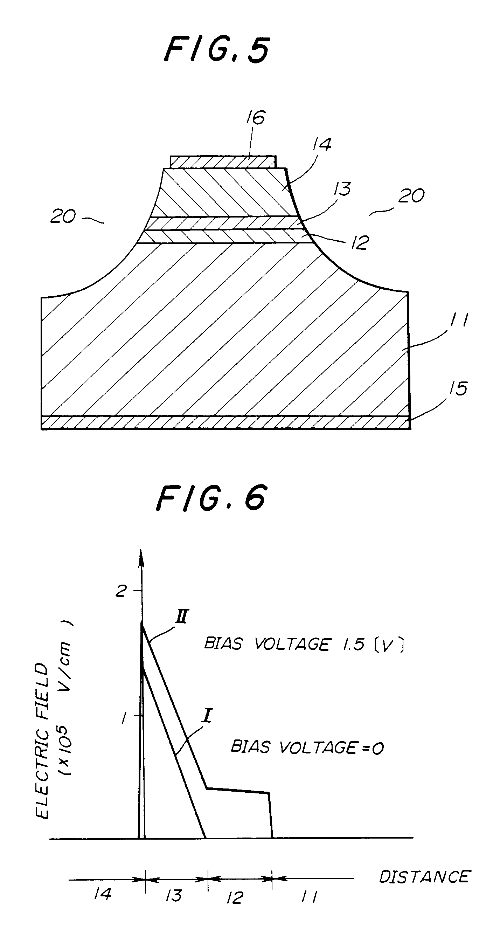

The optical intensity modulator of Figures 4 and 5 comprises a stack of compound semiconductor layers consisting respectively, in turn, of an n⁺-type indium-phosphide (InP) substrate 11, an n⁻-type indium-gallium-arsenide-phosphide (InGaAsP) active layer 12, an n-type indium-phosphide (InP) layer 13 and a p⁺-type indium-phosphide (InP) layer 14. An electrode 15 is formed on the lower main face of the substrate 11, and an electrode 16 is formed on the upper main face of the layer 14. An InP semi-insulator (not shown) may be formed in element-to-element insulating grooves 20 formed by etching. A plurality of optical intensity modulators may be formed on the substrate 11. The illustrated layer structure may be formed by a metal-organic vapour phase epitaxy (MOVPE) process or by a liquid phase epitaxy (LPE) process.

It will be noted that the conduction type of the InP layer 13, which is sandwiched between the active layer 12 and InP layer 14, is the same as that of the active layer 12 but opposite to that of the layer 14.

The impurity (majority carrier) density in the substrate 11 is 10²⁴ m⁻³. The thickness of each of the layers 12 and 13 is 0.2»m. The thickness of the layer 14 is 1»m, and the impurity density therein is 10²⁴ m⁻³.

The electrode 15 may be an AuGe/Au layer and the electrode 16 may be a Ti/Pt/Au layer.

Figure 6 is a graph illustrating the variation in electric field strength with position in the layers of the optical intensity modulator of Figures 4 and 5. The horizontal axis of the graph of Figure 6 represents distance in the thickness direction through the layers, and the vertical axis represents the electric field strength. A line I indicates the variation of the electric field strength in the absence of reverse bias applied externally, by way of the electrodes 15 and 16. The line II indicates the variation of the electric field strength when a reverse bias voltage of 1.5 V is applied between the electrodes 15 and 16.

The thickness d of the InP layer 13 of the modulator is chosen to be substantially in accordance with:${\text{d = [[(2ε}}_{\text{r}} {\text{.ε₀/(e.N)]·V}}_{\text{d}} {\text{]}}^{\text{1/2}} \text{,}$
where εr is the relative permittivity of the layer 13, ε₀ is the free space value of permittivity, e is the electronic charge, N is the majority carrier density in the layer 13, and V_{d} is the diffusion potential (junction contact potential) between the layers 13 and 14.

After selection of the carrier density N, which determines the gradient of the electric field intensity in the layer 13, selection of the thickness d of the layer 13 in accordance with the above formula can serve to ensure that, in the absence of any externally applied bias voltage, the electric field strength within the layer 13 falls, in the direction from the layer 14 to the layer 12, so as to attain substantially zero value at the interface between the layers 12 and 13, as illustrated by line I in Figure 6.

Accordingly, in the absence of an externally applied bias voltage, the active layer 12 is substantially unaffected by the electric field arising from the diffusion voltage within the modulator. However, a normal reverse bias voltage applied by way of the electrodes 15 and 16 will immediately cause the modulating electric field to be affective within the active layer 12 as illustrated by the line II in Figure 6, as required for operation of the modulator.

The incident laser beam L is emitted from a laser diode (not shown) which has a p⁺-type InP layer, an n-type InGaAsP layer and an n⁻-type InP layer, the structure being similar to that of the modulator as shown in Figure 1.

In an alternative embodiment of the present invention, the InP and InGaAsP layers of Figure 5 are replaced respectively by AlInP and AlGaInAs layers. Another possibility resides in reversing the conduction type of each of the layers 11 to 14 of Figure 5, so that they consist respectively of p⁺-type InP, p⁻-type InGaAsP, p-type InP and n⁺-type InP.

In a further embodiment, the active layer 12 has a multi-quantum well structure formed by growing a pair of layers, consisting respectively of InP and InGaAsP, a predetermined number of times in succession, for example, by MOVPE. Each of the InP and InGaAsP layers may be 10 nm thick. When there are ten such InP/InGaAsP layer pairs, the resulting active layer 12 is 0.2 »m thick. The mole fractions x and y for the In₁₋ₓGaₓAs_{y}P_{1-y} are as follows:
x = 0.47y
y = 0.9.

The laser diode and optical intensity modulator may have different substrates or alternatively may be formed on the same substrate (monolithically integrated). In the latter case the laser diode can be located close to the optical intensity modulator so that all laser beams emitted from the laser diode enter the active layer 12 of the modulator.

In a variation of the structure shown in Figure 5, the electrodes 15 and 16 may be formed on respective contact layers formed on the n⁺-type InP substrate 11 and the p⁺-type InP layer 14.

## Claims

1. An optical intensity modulator including a compound semiconductor substrate (11) of a first conduction type, a first electrode (15) formed on one main face of the substrate (11), a compound semiconductor active layer (12) for transmitting a laser beam (L) to be modulated, which layer is of the said first conduction type and is formed on an opposite main face of the substrate (11), a second compound semiconductor layer (13), of the said first conduction type, formed on the said active layer (12), a third compound semiconductor layer (14), of the opposite conduction type, formed on the said second compound semiconductor layer (13), so that the second semiconductor layer (13) is sandwiched between the said active layer (12) and the said third compound semiconductor layer (14), and a second electrode (16) formed on an outer main face of the third semiconductor layer (14), so that the third semiconductor layer (14) is sandwiched between that electrode (16) and the second semiconductor layer (13), characterised in that the thickness d of the said second semiconductor layer (13) satisfies the equation:${\text{d = [[(2ε}}_{\text{r}} {\text{·ε₀/(e.N)]·V}}_{\text{d}} {\text{]}}^{\text{1/2}} \text{,}$ where εᵣ is the relative permittivity of the second semiconductor layer (13), ε₀ is the free-space value of permittivity, e is the electronic charge, N is the majority carrier density in the second semiconductor layer (13), and V_{d} is the junction contact potential between the second and third semiconductor layers (13, 14).

2. An optical intensity modulator as claimed in claim 1, wherein the said active layer (12) consists of a single semiconductor material throughout its thickness.

3. An optical intensity modulator as claimed in claim 1, wherein the said substrate (11) is an n⁺-type indium-phosphide substrate, the said active layer (12) is an n⁻-type indium-gallium-arsenide-phosphide layer, the said second semiconductor layer (13) is n-type indium-phosphide layer, and the said third compound semiconductor layer (14) is p⁺-type indium-phosphide layer.

4. An optical intensity modulator as claimed in claim 1, wherein the said substrate (11) is a p⁺-type indium-phosphide substrate, the said active layer (12) is a p⁻-type indium-gallium-arsenide-phosphide layer, the said second semiconductor layer (13) is p-type indium-phosphide layer, and the said third semiconductor layer (14) is a n⁺-type indium-phosphide layer.

5. An optical intensity modulator as claimed in claim 1, wherein the said active layer (12) has a multi-quantum well layer structure.

6. An optical intensity modulator as claimed in claim 5, wherein the said multi-quantum well layer structure comprises a plurality of layers of a first compound semiconductor material stacked together with a plurality of layers of a second compound semiconductor material so that layers of the two materials alternate with one another in the stack.

7. An optical intensity modulator as claimed in claim 6, wherein the said first compound semiconductor material comprises indium-phosphide and the said second compound semiconductor material comprises indium-gallium-arsenide-phosphide.

8. An optical intensity modulator as claimed in any preceding claim, in combination with a laser for producing such a laser beam, wherein the said active layer (12) is characterised by an absorption edge that differs in energy from the beam (L) by no more than 50 meV in the absence of an externally applied potential difference between the said first and second electrodes.

## Patentansprüche

1. Optischer Intensitätsmodulator, beinhaltend ein Verbundhalbleitersubstrat (11) eines ersten Leitungstyps, eine erste Elektrode (15), die auf einer Hauptfläche des Substrats (11) ausgebildet ist, eine aktive Verbundhalbleiterschicht (12) zum Übertragen eines zu modulierenden Laserstrahls (L), die eine Schicht des ersten Leitungstyps ist und auf einer entgegengesetzten Hauptfläche des Substrats (11) ausgebildet ist, eine zweite Verbundhalbleiterschicht (13) des ersten Leitungstyps, die auf der aktiven Schicht (12) ausgebildet ist, eine dritte Verbundhalbleiterschicht (14) des entgegengesetzten Leitungstyps, die auf der zweiten Verbundhalbleiterschicht (13) ausgebildet ist, so daß die zweite Halbleiterschicht (13) sandwichartig zwischen der aktiven Schicht (12) und der dritten Verbundhalbleiterschicht (14) liegt, und eine zweite Elektrode (16), die auf einer äußeren Hauptfläche der dritten Halbleiterschicht (14) ausgebildet ist, so daß die dritte Halbleiterschicht (14) sandwichartig zwischen dieser Elektrode (16) und der zweiten Halbleiterschicht (13) liegt, dadurch gekennzeichnet, daß die Dicke d der zweiten Halbleiterschicht der Gleichung genügt:${\text{d = [[(2ε}}_{\text{r}} {\text{.ε₀/(e.N)]·V}}_{\text{d}} {\text{]}}^{\text{1/2}}$ wobei εᵣ die relative Dielektrizitätskonstante der zweiten Halbleiterschicht ist, ε₀ der Freiraumwert der Dielektrizitätskonstante ist, e die elektronische Ladung ist, N die Majoritätsträgerdichte in der zweiten Halbleiterschicht (13) ist und V_{d} das Übergangskontaktpotential zwischen der zweiten und der dritten Halbleiterschicht (13, 14) ist.

2. Optischer Intensitätsmodulator nach Anspruch 1, bei welchem die aktive Schicht (12) über ihre gesamte Dicke aus einem einzelnen Halbleitermaterial besteht.

3. Optischer Intensitätsmodulator nach Anspruch 1, bei welchem das Substrat (11) ein Indium-Phosphid-Substrat des n⁺-Typs ist, die aktive Schicht (12) eine Indium-Gallium-Arsenid-Phosphid-Schicht des n⁻-Typs ist, die zweite Halbleiterschicht (13) eine Indium-Phosphid-Schicht des n-Typs und die dritte Verbundhalbleiterschicht (14) eine Indium-Phosphid-Schicht des p⁺-Typs ist.

4. Optischer Intensitätsmodulator nach Anspruch 1, bei welchem das Substrat (11) ein Indium-Phosphid-Substrat des p⁺-Typs ist, die aktive Schicht (12) eine Indium-Gallium-Arsenid-Phosphid-Schicht des p⁻-Typs ist, die zweite Halbleiterschicht (13) eine Indium-Phosphid-Schicht des p-Typs und die dritte Verbundhalbleiterschicht (14) eine Indium-Phosphid-Schicht des n⁺-Typs ist.

5. Optischer Intensitätsmodulator nach Anspruch 1, bei welchem die aktive Schicht (12) eine Mehrfach-Potentialtopf-Schichtstruktur hat.

6. Optischer Intensitätsmodulator nach Anspruch 5, bei welchem die Mehrfach-Quantengraben-Schichtstruktur eine Vielzahl von Schichten eines ersten Verbundhalbleitermaterials umfaßt, die zusammen mit einer Vielzahl von Schichten eines zweiten Verbundhalbleitermaterials gestapelt sind, so daß die Schichten der beiden Materialien einander in dem Stapel alternieren.

7. Optischer Intensitätsmodulator nach Anspruch 6, bei welchem das erste Verbundhalbleitermaterial Indium-Phosphid umfaßt und das zweite Verbundhalbleitermaterial Indium-Gallium-Arsenid-Phosphid umfaßt.

8. Optischer Intensitätsmodulator nach einem der vorstehenden Ansprüche in Kombination mit einem Laser zur Erzeugung eines derartigen Laserstrahles, bei welchem die aktive Schicht (12) gekennzeichnet ist durch eine Absorptionskante, die sich energetisch vom Strahl (L) um nicht mehr als 50 meV in Abwesenheit einer extern angelegten Potentialdifferenz zwischen der ersten und der zweiten Elektrode unterscheidet.

## Revendications

1. Modulateur d'intensité optique, comprenant un substrat (11) d'un composé semi-conducteur d'un premier type de conduction, une première électrode (15) formée sur une première face principale du substrat (11), une couche active (12) d'un composé semi-conducteur, destinée à transmettre un faisceau laser (L) à moduler, cette couche étant du premier type de conduction et étant formée sur une grande face opposée du substrat (11), une seconde couche (13) d'un composé semi-conducteur du premier type de conduction, formée sur la couche active (12), une troisième couche (14) d'un composé semi-conducteur ayant le type opposé de conduction, formée sur la seconde couche (13) d'un composé semi-conducteur, afin que la seconde couche semi-conductrice (13) soit comprise entre la couche active (12) et la troisième couche (14) d'un composé semi-conducteur, et une seconde électrode (16) formée sur une grande face externe de la troisième couche semi-conductrice (14) afin que la troisième couche semi-conductrice (14) soit comprise entre cette électrode (16) et la seconde couche semi-conductrice (13), caractérisé en ce que l'épaisseur d de la seconde couche semi-conductrice (13) correspond à l'équation :${\text{d=[[(2ε}}_{\text{r}} {\text{-ε₀/(e.N)].V}}_{\text{d}} {\text{]}}^{\text{1/2}}$ εᵣ, étant la permittivité relative de la seconde couche semiconductrice (13), ε₀ la permittivité du vide, e la charge électronique, N la densité des porteurs majoritaires dans la seconde couche semi-conductrice (13), et V_{d} le potentiel de contact de la jonction formée entre la seconde et la troisième couche semi-conductrice (13, 14).

2. Modulateur d'intensité optique selon la revendication 1, dans lequel la couche active (12) est formée d'une seule matière semi-conductrice dans toute son épaisseur.

3. Modulateur d'intensité optique selon la revendication 1, dans lequel le substrat (11) est un substrat de phosphure d'indium de type n⁺, la couche active (12) est une couche de phosphore-arséniure d'indium-gallium de type n⁻, la seconde couche semi-conductrice (13) est une couche de phosphure d'indium de type n, et la troisième couche (14) d'un composé semi-conducteur est une couche de phosphure d'indium de type p⁺.

4. Modulateur d'intensité optique selon la revendication 1, dans lequel le substrat (11) est un substrat de phosphure d'indium de type p⁺, la couche active (12) est une couche de phosphure-arséniure d'indium-gallium de type p⁻, la seconde couche semi-conductrice (13) est une couche de phosphure d'indium de type p, et la troisième couche semi-conductrice (14) est une couche de phosphure d'indium de type n⁺.

5. Modulateur d'intensité optique selon la revendication 1, dans lequel la couche active (12) a une structure de couche à puits quantique multiple.

6. Modulateur d'intensité optique selon la revendication 5, dans lequel la structure de la couche à puits quantique multiple comprend plusieurs couches d'une première matière d'un composé semi-conducteur empilées avec plusieurs couches d'une seconde matière d'un composé semiconducteur afin que les couches des deux matières alternent dans la pile.

7. Modulateur d'intensité optique selon la revendication 6, dans lequel la première matière d'un composé semi-conducteur est le phosphure d'indium et la seconde matière d'un composé semi-conducteur est le phosphure-arséniure d'indium-gallium.

8. Modulateur d'intensité optique selon l'une quelconque des revendications précédentes, combiné à un laser générateur d'un faisceau laser, dans lequel la couche active (12) est caractérisée par une limite d'absorption dont l'énergie diffère du faisceau (L) d'une valeur qui ne dépasse pas 50 meV en l'absence d'une différence de potentiel appliquée extérieurement entre les première et seconde électrodes.
